# EUROPEAN PATENT SPECIFICATION

(11) **EP 0 570 345 B1**
(45) Date of publication and mention of the grant of the patent: **26.08.1998**
(21) Application number: 93830196.7
(22) Date of filing: 11.05.1993
(51) Int. Cl.: H01S 3/08, G02B 26/08

(54) **Method and apparatus for producing varying-geometry mirrors to be used in conventional and free-electron lasers**
Verfahren und Vorrichtung zur Herstellung von Spiegeln mit verstellbarer Geometrie für konventionelle und Freie-Elektronen-Laser
Méthode et appareil pour la fabrication des miroirs à géométrie variable pour lasers classiques et à électrones libres

(30) Priority: 13.05.1992 IT RM920362
(43) Date of publication of application: 18.11.1993
(73) Proprietor: ENEA ENTE PER LE NUOVE TECNOLOGIE, L'ENERGIA E L'AMBIENTE, I-00198 Roma (IT)
(72) Inventor: Doria, Andrea, I-00040 Rocca Priora (Roma) (IT); Gallerano, Gian Piero, I-00135 Roma (IT); Giannessi, Luca, I-00143 Roma (IT); Mezi, Luca, I-00174 Roma (IT)
(74) Representative: Sarpi, Maurizio

(56) References cited:
- EP-A- 0 471 362
- US-A- 2 555 387
- US-A- 4 143 946
- US-A- 4 488 789
- US-A- 4 571 603

## Description

The present invention relates to a method of producing varying-geometry mirrors, in particular reflectors for optical resonators, having varying geometry and intended to be used in free-electron lasers (FEL) or conventional lasers operating in the infrared to the millimeter range. This invention also relates to an apparatus for carrying out said method.

One of the problems encountered in the output coupling of optical resonators in the deep infrared range is due to the fact that the materials used for the manufacture of optics operating at such wavelengths have a low transmittance. In order to overcome such problems, metal grids have been used for long time having reflection factor and transmittance depending upon their geometric form.

In case of free-electron lasers (FEL) the metal grids have the further advantage of allowing the almost undisturbed passage of the electron beam and thus its injection into the interaction region without bulky assemblies and expensive magnetic deflection devices. At present, however, such grids can only be placed on rigid planar supports, thus impeding optimization of the cavity design. This problem is particularly acute in case of free-electron lasers because of the critical coupling between the electron beam and the radiation of the resonator.

There are known devices capable of changing the bending of a mirror by means of electromagnetically controlled actuators locally operating on the surface of the mirror. Such actuators may act via mechanical means to transmit forces to the mirror (US-A-4 143 946, -EP-A-0 471 362 ). US-A-4 488 789 describes a mirror pivotably mounted to a support, whereby a current carrying coil mounted to the underside of the mirror causes the mirror to rotate under the influence of a net torque produced by the coil in a magnetic field.

In US-A-4 571 603 Patent (L.J. Hombeck et al) the bending of the mirror comprising a membrane metallization underneath a membrane substrate is provided by electrostatic interaction with the membrane metallization which forms one plate of an air gap capacitor.

US-A-2 555 387 describes a mirror that has a small permanent magnet attached to its centre, whereby an electromagnet, which is mounted with its pole pieces in close relation with the pole ends of the permanent magnet, causes the permanent magnet to be attracted or repelled, in order to deform the mirror to concavity or convexity.

The present invention aims at solving the problem mentioned above in a practical, effective, and economical manner.

The present invention is defined by the method of claim 1 and the apparatus of claim 7. Embodiments of the invention are set out in the dependent claims.

According to the invention a method is provided for bending a grid or a thin metal sheet by subjecting directly it to a magnetic force field in order to obtain a reflector having the desired bending radius.

There are numerous embodiments of this method. If the reflector is made of ferromagnetic material, the force field generated by a pair of permanent magnets can be used, in particular by taking advantage of the variation of the field due to the edge effects. Also in this case the desired curvature can be provided by a suitable selection of geometrical constraints.

In the case of a reflector of non-ferromagnetic material, it is also possible to effect the preceding arrangement by passing the appropriate electric current through the material. In particular, by inducing upon the reflector a current which varies as a function of position (for example, in case of a grid, by supplying current independently to groups of wires or single wires) it is possible to induce local variations in the curvature. These variations may be used to correct aberrations of optical elements in cavities or to provide particular curvatures which are difficult to obtain with conventional systems.

According to certain embodiments the reflector is evenly urged. In accordance with the invention it is possible to manufacture suitable optical reflectors, whose bending radius can be dynamically varied by changing only the boundary conditions of the grid or the sheet or by modifying the force field to which it is subjected. The change can also be made in an extremely short time, during the leading edge of the pulse in the cavity, by dynamically varying the distribution of the transverse modes. The latter solution is absolutely new in the field of the optical resonator and would allow, for example, energy from the resonator to be obtained at a predetermined time, thus making the cavity unstable, or the efficiency of a laser source to be further improved by only "scanning" all of the available volume of the active means by overlapping the excited modes.

An apparatus for carrying out the method according to the invention is shown by way of a non-limitative example in the accompanying drawings, in which:

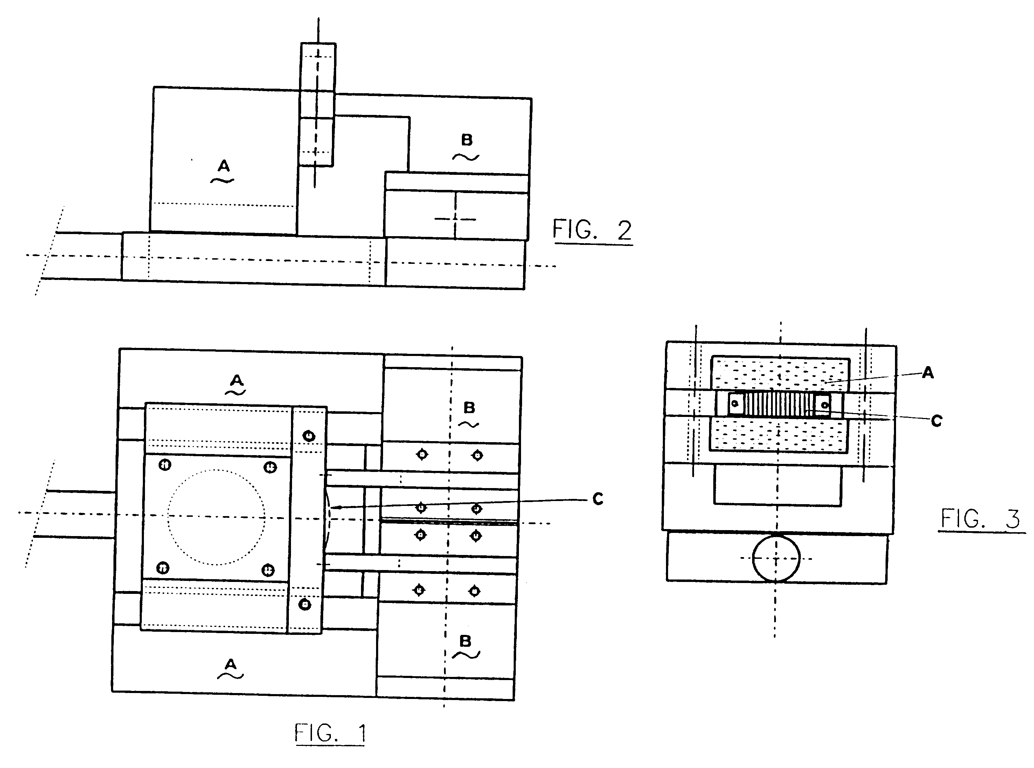

Fig. 1 is a plan view of the device;
Figs. 2 and 3 are two side elevation views.

With reference to the drawings, the device uses as force field the stationary magnetic field generated by a pair of permanent magnets (samarium-cobalt) and consists of two basic elements, one of which, indicated at A, is formed by the magnet holder, the second (B) by the support of the reflector to be subjected to bending. This allows the two subassemblies to be assembled separately and the installation of reflector C formed of a grid which is not subjected to the field during the assembly to be facilitated.

Element A is supported by a slide which allows the distance between the magnets and reflector C to be adjusted through a micrometer actuator and consequently the density of the lines of force of the field acting on the reflector to be varied. Element B in turn is formed of two brackets supporting the reflector, the distance of which can be symmetrically adjusted with respect to the middle plane through another micrometer actuator, thus determining the bending radius of reflector C.

From the foregoing some advantages achieved by the method and the apparatus described above are evident:
- the deformation, to which the reflector is subjected, is in accordance with certain embodiments total and not limited only to local stress, which impairs the optical properties of the resonator; it is thus possible to achieve suitable optical qualities over a wide region of the reflector;
- the geometrical characteristics of the reflector can be dynamically varied in time, thus increasing both the quantity and the quality of the possible interventions upon an optical resonator in order to improve the efficiency as far as the power and the optical qualities of the laser radiation emitted at the wavelengths, at which the system can be operated, is concerned.

The present invention has been illustrated and described according to preferred embodiments thereof, however, construction and/or operative modifications can be made in practice by those skilled in the art without departing from the scope of the present invention as defined by the claims.

## Claims

1. A method of producing a varying-geometry mirror, consisting in bending a metal grid or a thin metal sheet (C) forming the surface of the mirror itself by directly submitting it to a magnetic force field in order to cause a stress on the mirror, thus obtaining the desired curvature in said mirror.

2. The method according to claim 1, characterized in that the curvature of the mirror is determined by the transverse length of the mirror, the existing geometrical constraints, and the response of the material to the magnetic force field.

3. The method according to claim 2, characterized in that the obtained mirror has the form of a catenary, and the bending radius near the lowest point of the latter is determined by the ratio between the length of the sheet or grid and the gap between the supports (B) thereof.

4. The method according to any one of claims 1 to 3, characterized in that, in case of said mirror being made of a non-ferromagnetic material, the deformation is obtained by passing a suitable electric current through said mirror, whose intensity can vary as a function of the position, so as to induce local variations to the curvature of the mirror.

5. The method according to claim 4, characterized in that said local variations of the curvature can be used for the correction of the aberrations of optical elements in cavities, or for the construction of mirrors having composite curvatures.

6. The method according to any one of the preceding claims, characterized in that the bending radius can be dynamically varied by changing the boundary conditions of the grid or sheet, or by modifying the force field to which the latter is subjected.

7. An apparatus for producing a varying-geometry mirror from a metal grid or a thin metal sheet forming the surface of the mirror, comprising a pair of permanent magnets (A) directly submitting said grid or sheet to a magnetic force field in order to bend said grid or sheet and so obtain the desired curvature in said mirror and a support (B) for said grid or thin metal sheet (C) to be bent, said grid or thin metal sheet being placed between said magnets.

8. The apparatus according to claim 7, characterized in that the pair of permanent magnets is supported by a slide associated to a micrometer actuator having the function of adjusting the distance between the magnets and the mirror.

9. The apparatus of claim 8, characterized in that the support for the mirror is formed by a pair of brackets, the distance of which can be varied with respect to the middle plane through a second micrometer actuator in order to determine the bending radius of the mirror.

## Patentansprüche

1. Verfahren zur Herstellung eines Spiegels mit veränderlicher Geometrie, bestehend aus Biegen eines metallischen Gitters oder eines dünnen Metallblechs (C) bzw. einer dünnen Metallfolie, das die Oberfläche des Spiegels selbst bildet, indem es unmittelbar einem magnetischen Kraftfeld ausgesetzt wird, um eine Spannung auf dem Spiegel zu verursachen, um auf diese Weise die gewünschte Krümmung in dem Spiegel zu erhalten.

2. Verfahren nach Anspruch 1,
dadurch gekennzeichnet,
daß die Krümmung des Spiegels durch die querlaufende Länge des Spiegels, die vorhandenen geometrischen Abhängigkeiten und die Reaktion des Materials auf das magnetische Kraftfeld bestimmt wird.

3. Verfahren nach Anspruch 2,
dadurch gekennzeichnet,
daß der erhaltene Spiegel die Form einer Kettenlinie aufweist, und daß der Krümmungsradius nahe dem untersten Punkt derselben durch das Verhältnis zwischen der Länge des Blechs bzw. der Folie oder des Gitters und dem Spalt zwischen deren Lagerung (B) bestimmt wird.

4. Verfahren nach einem der Ansprüche 1 - 3,
dadurch gekennzeichnet,
daß für den Fall einer Herstellung des Spiegels aus einem nicht-ferrometischem Material die Verformung durch Leiten eines geeigneten elektrischen Stroms durch den Spiegel erreicht wird, dessen Intensität abhängig von der Stellung derart ändern kann, daß örtliche Veränderungen der Krümmung des Spiegels induziert werden.

5. Verfahren nach Anspruch 4,
dadurch gekennzeichnet,
daß die örtlichen Veränderungen der Krümmung zur Korrektur der Aberrationen von optischen Elementen in Hohlräumen oder für den Aufbau von Spiegeln mit zusammengesetzten Krümmungen verwendbar sind.

6. Verfahren nach einem der vorangehenden Ansprüche,
dadurch gekennzeichnet,
daß der Krümmungsradius durch Änderung der Randbedingungen des Gitters oder des Blechs/der Folie oder durch Modifizieren des Kraftfeldes, dem das letztere ausgesetzt wird, dynamisch variierbar ist.

7. Vorrichtung zur Herstellung eines Spiegels mit veränderlicher Geometrie aus einem Metallgitter oder einem dünnen Metallblech bzw. einer dünnen Metallfolie, die die Oberfläche des Spiegels bildet, mit einem Paar Permanentmagnete (A), die unmittelbar das Gitter, das Blech bzw. die Folie einem magnetischen Kraftfeld aussetzen, um das Gitter oder das Blech bzw. die Folie zu biegen und auf diese Weise die gewünschte Krümmung in dem Spiegel zu erreichen, und einen Halter (B) für das zu verbiegende Gitter oder das dünne Metallblech (C) bzw. die dünne Metallfolie, der zwischen den Magneten angeordnet ist.

8. Vorrichtung nach Anspruch 7,
dadurch gekennzeichnet,
daß das Paar Permanentmagnete von einem Schlitten gehalten ist, der einer Mikrometerbetätigungseinrichtung zugeordent ist, welche die Funktion hat, den Abstand zwischen dem Magneten und dem Spiegel einzustellen.

9. Vorrichtung nach Anspruch 8,
dadurch gekennzeichnet,
daß der Halter für den Spiegel durch ein Paar Klammern gebildet ist, deren Abstand bzüglich der Mittelebene durch eine zweite Mikrometerbetätigungseinrichtung zur Bestimmung des Biegeradius des Spiegels variierbar ist.

## Revendications

1. Une méthode pour la fabrication d'un miroir à géométrie variable, consistant à plier une grille métallique ou une mince feuille métallique (C) constituant la surface du miroir elle-même en la soumettant directement à un champ de forces magnétiques de manière à provoquer une contrainte sur le miroir, en obtenant ainsi la courbure désirée dans ledit miroir.

2. La méthode selon la revendication 1, caractérisée ne ce que la courbure du miroir est déterminée par la longueur transversale du miroir, les contraintes géométriques existantes, et la réponse de la matière au champ de forces magnétiques.

3. La méthode selon la revendication 2, caractérisée en ce que le miroir obtenu présente la forme d'une chaînette, et en ce que le rayon de pliage près du point le plus bas de ce dernier est déterminé par le rapport entre la longueur de la feuille ou de la grille et l'intervalle entre ses supports (B).

4. La méthode selon une quelconque des revendications 1 à 3, caractérisée en ce que, dans le cas où ledit miroir est réalisé en une matière non-ferromagnétique, la déformation est obtenue en faisant passer, à travers ledit miroir, un courant électrique approprié dont l'intensité peut varier en fonction de la position, de manière à induire des variations locales à la courbure du miroir.

5. La méthode selon la revendication 4, caractérisée en ce que lesdites variations locales de la courbure peuvent être utilisées pour la correction des aberrations d'éléments optiques prévus dans des cavités, ou pour la réalisation de miroirs présentant des courbures composites.

6. La méthode selon une quelconque des revendications précédentes, caractérisée en ce que le rayon de pliure peut être modifié de manière dynamique en changeant les conditions limites de la grille ou de la feuille, ou en modifiant le champ de forces auquel cette dernière est soumise.

7. Un appareil pour la fabrication d'un miroir à géométrie variable à partir d'une grille métallique ou d'une mince feuille métallique constituant la surface du miroir, comprenant une paire d'aimants permanents (A) soumettant directement ladite grille ou ladite feuille à un champs de forces magnétiques de manière à plier ladite grille ou ladite feuille et obtenir ainsi la courbure désirée dudit miroir, et un support (B) pour ladite grille ou ladite mince feuille métallique (C) à plier, ladite grille ou ladite mince feuille métallique étant placée entre lesdits aimants.

8. L'appareil selon la revendication 7, caractérisé en ce que la paire d'aimants permanents est supportée par une glissière associée à un dispositif d'actionnement micrométrique ayant pour fonction de régler la distance entre les aimants et le miroir.

9. L'appareil de la revendication 8, caractérisé en ce que le support pour le miroir est. formé par une paire de consoles, dont la distance peut être modifiée par rapport au plan médian par l'intermédiaire d'un second dispositif d'actionnement micrométrique de manière à déterminer le rayon de pliure du miroir.
